# EUROPEAN PATENT SPECIFICATION

(11) **EP 4 344 902 B1**
(45) Date of publication and mention of the grant of the patent: **05.11.2025**
(21) Application number: 23195971.9
(22) Date of filing: 07.09.2023
(51) Int. Cl.: B60C 11/03, B60C 11/11, B60C 11/00

(54) **TIRE FOR MOTORCYCLE FOR RUNNING ON ROUGH TERRAIN**
REIFEN FÜR MOTORRAD ZUM FAHREN AUF UNEBENEM GELÄNDE
PNEU POUR MOTOCYCLETTE POUR TERRAIN ACCIDENTÉ

(30) Priority: 27.09.2022 JP 2022153455
(43) Date of publication of application: 03.04.2024
(73) Proprietor: Sumitomo Rubber Industries, Ltd., Kobe-shi, Hyogo 651-0072 (JP)
(72) Inventor: KOBORI, Shuji, Kobe-shi, 651-0072 (JP)
(74) Representative: Manitz Finsterwald Patent- und Rechtsanwaltspartnerschaft mbB

(56) References cited:
- JP-A- 2020 111 263
- JP-A- 2020 111 264
- US-A1- 2012 024 443
- US-A1- 2021 354 516
- US-A1- 2022 072 911
- US-B2- 8 631 845
- US-B2- 9 783 007

## Description

### CROSS REFERENCE TO RELATED APPLICATION

This application claims priority on Japanese Patent Application No. 2022-153455 filed in Japan on September 27, 2022.

### TECHNICAL FIELD

The present invention relates to tires for a motorcycle for running on rough terrain.

### BACKGROUND ART

The tread of a tire for a motorcycle for running on rough terrain has a plurality of blocks. The tire obtains frictional force by scratching a road surface with the blocks. High frictional force increases the grip force of the tire. High grip force contributes to improvement of traction performance.

The blocks are worn. As the frictional force decreases due to the wear, the grip force decreases. In order to obtain a tire that can stably exert high grip force, it has been proposed to control the shapes of the blocks (e.g., PATENT LITERATURE 1 below).

### CITATION LIST

### [PATENT LITERATURE]

PATENT LITERATURE 1: Japanese Laid-Open Patent Publication No. 2015-134578 A motorcycle tire having the features of the preamble of claim 1 is known from US 2021/354516 A1. Related tires are described in US 9 783 007 B2, JP 2020 111264 A, US 2022/072911 A1, US 8 631 845 B2, US 2012/024443 A1 and JP 2020 111263 A.

### SUMMARY OF THE INVENTION

### [TECHNICAL PROBLEM]

In an approach from the viewpoint of shape, the shapes of the blocks are limited in terms of durability. Even if the grip force can be improved, the durability of the blocks may be reduced. Establishment of a technology capable of improving traction performance without impairing durability is required.

The present invention has been made in view of such circumstances. An object of the present invention is to provide a tire, for a motorcycle for running on rough terrain, which can have improved traction performance without impairing durability.

### [SOLUTION TO PROBLEM]

A tire for a motorcycle for running on rough terrain according to the present invention includes a tread formed from a crosslinked rubber and having a tread surface that comes into contact with a road surface. The tread includes a plurality of blocks each having a land surface forming a part of the tread surface. The plurality of blocks include a plurality of center blocks located on an equator plane. The plurality of center blocks include a main center block having, in the land surface thereof, a center of gravity of the land surface. At the center of gravity of the land surface of the main center block, an axial length of the main center block is not less than twice a circumferential length thereof. The main center block has a hardness of not greater than 70. The main center block has a 300% modulus of not less than 8.5 MPa. The hardness is measured according to JIS K6253 under a temperature condition of 23°C and the 300% modulus is measured according to JIS K6251 under a temperature condition of 75°C.

### [ADVANTAGEOUS EFFECTS OF THE INVENTION]

According to the present invention, a tire, for a motorcycle for running on rough terrain, which can have improved traction performance without impairing durability, is obtained.

### BRIEF DESCRIPTION OF DRAWINGS

FIG. 1 is a cross-sectional view showing a part of a tire for a motorcycle according to an embodiment of the present invention.
FIG. 2 is a development of a tread surface of the tire shown in FIG. 1.
FIG. 3 is an enlarged development showing a part of FIG. 2.

### DETAILED DESCRIPTION

The following will describe in detail the present invention based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including the rotation axis of the tire. In this measurement, the tire is set such that the distance between right and left beads is made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a rubber composition refers to a composition that is obtained by mixing a base rubber and chemicals in a kneading machine such as a Banbury mixer and that contains the uncrosslinked base rubber. A crosslinked rubber refers to a crosslinked product, of the rubber composition, obtained by pressurizing and heating the rubber composition. The crosslinked rubber contains a crosslinked product of the base rubber. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components such as a tread and sidewalls for which the rubber composition is used.

In the present invention, a 300% modulus of a component formed from a crosslinked rubber, of the components included in the tire, means the tensile stress at 300% elongation specified in JIS K6251. The 300% modulus is measured according to the standards of JIS K6251. In this measurement, a test piece is sampled from the tire such that the length direction thereof coincides with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the 300% modulus is represented as a 300% modulus at 75°C.

In the present invention, the hardness of a component formed form a crosslinked rubber, from among the components included in the tire, is measured according to JIS K6253 under a temperature condition of 23°C using a type A durometer.

In the present invention, the land surface is a part of a tread surface other than grooves included in the tread surface. In the case of a tread having a block pattern, the top surface of each block is the land surface. Of the tread surface, a portion other than the land surface corresponds to the grooves and is also referred to as sea surface. The ratio of the total area of the land surface included in the tread surface to the area of the tread surface is a land ratio. In the present invention, the land ratio is calculated on the basis of a development of the tread surface. The area of the tread surface is equal to the sum of the total area of the land surface and the total area of the sea surface.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Outline of embodiments of the present invention]

### [Configuration 1]

A tire for a motorcycle for running on rough terrain according to an aspect of the present invention includes a tread formed from a crosslinked rubber and having a tread surface that comes into contact with a road surface, wherein: the tread includes a plurality of blocks each having a land surface forming a part of the tread surface; the plurality of blocks include a plurality of center blocks located on an equator plane; the plurality of center blocks include a main center block having, in the land surface thereof, a center of gravity of the land surface; at the center of gravity of the land surface of the main center block, an axial length of the main center block is not less than twice a circumferential length thereof; the main center block has a hardness of not greater than 70; and the main center block has a 300% modulus of not less than 8.5 MPa.

By forming the tire as described above, in the tire, while the stiffness of the main center block is ensured, the amount by which the main center block scratches a road surface can be increased when the main center block comes into contact with the road surface. The grip force is improved, so that the tire can have improved traction performance.

Furthermore, the main center block can be easily deformed in a low strain region. Thus, in the tire, the contact area between the main center block and a road surface when the main center block comes into contact with the road surface can be increased. The tire can increase the grip force and thus can have further improved traction performance.

The main center block has high strength in a high strain region. Thus, even if the main center block is greatly deformed and the side surfaces of the main center block are greatly stretched, damage, such as cracks, to the main center block is less likely to occur.

The tire can have improved traction performance without impairing durability.

### [Configuration 2]

Preferably, in the tire for a motorcycle for running on rough terrain described in [Configuration 1] above, a ratio of the axial length of the main center block to the circumferential length of the main center block is not less than 2.0 and not greater than 2.9.

By forming the tire as described above, the contact area between the main center block and a road surface when the main center block comes into contact with the road surface can be sufficiently increased. The tire can have further improved traction performance. The tire can optimize the force acting on the main center block, and thus can suppress occurrence of damage to the main center block (especially damage from the root thereof).

### [Configuration 3]

Preferably, in the tire for a motorcycle for running on rough terrain described in [Configuration 1] or [Configuration 2] above, half or more of the plurality of center blocks are each the main center block.

By forming the tire as described above, the tire can have further improved traction performance without impairing durability.

### [Configuration 4]

Preferably, in the tire for a motorcycle for running on rough terrain described in any one of [Configuration 1] to [Configuration 3] above, a block height of the main center block is not less than 15 mm and not greater than 20 mm in a state where the tire is fitted on a normal rim, an internal pressure of the tire is adjusted to a normal internal pressure, and no load is applied to the tire.

By forming the tire as described above, in the tire, the contact area between the main center block and a road surface when the main center block comes into contact with the road surface can be sufficiently increased. The tire can have further improved traction performance. The tire can suppress occurrence of damage to the main center block and thus can maintain good durability.

### [Configuration 5]

Preferably, in the tire for a motorcycle for running on rough terrain described in any one of [Configuration 1] to [Configuration 4] above, the tread surface has a land ratio of not less than 13% and not greater than 60%.

By forming the tire as described above, the main center block can sufficiently perform its function. The tire can have improved traction performance without impairing durability.

### [Details of embodiments of the present invention]

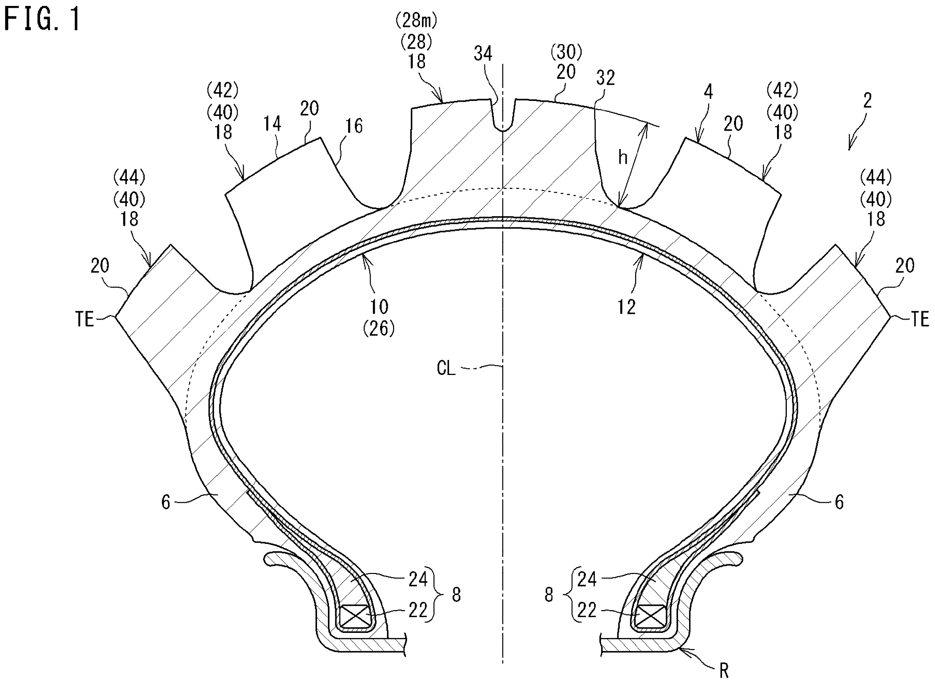

FIG. 1 shows a part of a tire 2 for a motorcycle for running on rough terrain (hereinafter, also referred to as tire 2) according to an embodiment of the present invention. In FIG. 1, the tire 2 is fitted on a rim R (normal rim) and is in a normal state. The tire 2 is mounted to a motorcycle for running on rough terrain.

FIG. 1 shows a part of a cross-section (hereinafter, meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. The tire 2 rotates in the circumferential direction about the rotation axis thereof. The circumferential direction of the tire 2 is also a rotation direction. An alternate long and short dash line CL represents the equator plane of the tire 2.

The tire 2 includes a tread 4, a pair of sidewalls 6, a pair of beads 8, a carcass 10, and an inner liner 12.

Although not described in detail, the tire 2 can include components such as a belt and insulations in addition to these components.

The tread 4 is formed from a crosslinked rubber. The tread 4 has a tread surface 14 which comes into contact with a road surface. In FIG. 1, reference sign TE represents an end of the tread surface 14.

The tread 4 includes a plurality of blocks 18 demarcated by grooves 16. These blocks 18 form a block pattern. Each block 18 has a land surface 20 which forms a part of the tread surface 14.

Each sidewall 6 is connected to an end of the tread 4. The sidewall 6 extends radially inward along the carcass 10. The sidewall 6 is formed from a crosslinked rubber for which cut resistance is taken into consideration.

Each bead 8 is located radially inward of the sidewall 6. The bead 8 includes a core 22 and an apex 24. The core 22 has a ring shape and includes a steel wire. The apex 24 is located radially outward of the core 22. The apex 24 is formed from a crosslinked rubber having high stiffness. The apex 24 is tapered outward.

The carcass 10 is located inward of the tread 4 and the pair of sidewalls 6. The carcass 10 extends on and between the pair of beads 8. The carcass 10 includes at least one carcass ply 26. The carcass 10 of the tire 2 is composed of one carcass ply 26. The carcass ply 26 is turned up at each bead 8. The carcass ply 26 includes a large number of carcass cords aligned with each other, which are not shown.

The inner liner 12 is located inward of the carcass 10. The inner liner 12 forms an inner surface of the tire 2. The inner liner 12 is formed from a crosslinked rubber that has a low gas permeability coefficient. The inner liner 12 maintains the internal pressure of the tire 2.

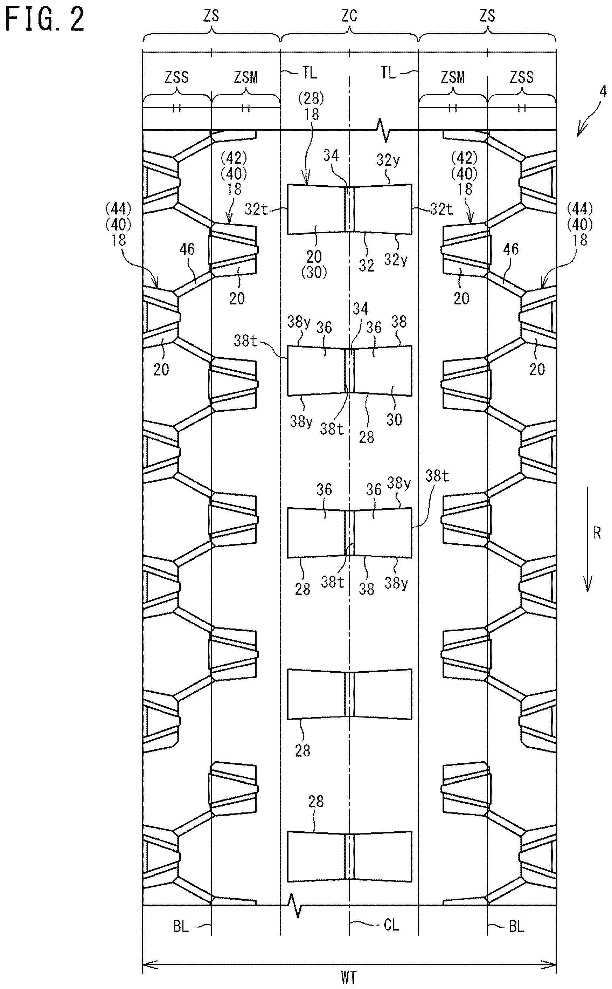

FIG. 2 is a development of the tread surface 14 of the tire 2. FIG. 2 shows the block pattern of the tire 2. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2.

In the present invention, for convenience of description, the shape of each block 18 is represented on the basis of the dimensions of the tire 2.

In FIG. 2, a direction indicated by an arrow R is the rotation direction of the tire 2. The tire 2 comes into contact with a road surface from the lower side toward the upper side of the surface of the drawing sheet of FIG. 2. The lower side of the surface of the drawing sheet is a leading edge side in the rotation direction, and the upper side of the surface of the drawing sheet is a trailing edge side in the rotation direction.

In FIG. 2, a length indicated by a double-headed arrow WT is a development width of the tread surface 14. The development width WT is the distance, from a first end TE to a second end TE of the tread surface 14, measured along the tread surface 14.

In FIG. 2, two solid lines TL located on both sides of the equator plane CL are division lines that divide the development width WT of the tread surface 14 into three equal parts.

A region from a first division line TL to a second division line TL is also referred to as center region ZC. Regions from the division lines TL to the ends TE of the tread surface 14 are also referred to as side regions ZS.

In FIG. 2, a solid line BL located between each division line TL and each end TE of the tread surface 14 is a division line that divides a region from the division line TL to the end TE of the tread surface 14 into equal two parts.

In each side region ZS, a region from the division line TL to the division line BL is also referred to as middle region ZSM. A region from the division line BL to the end TE of the tread surface 14 is also referred to as shoulder region ZSS.

In the center region ZC, a plurality of center blocks 28 are provided. These center blocks 28 are located on the equator plane CL. The plurality of blocks 18 provided in the tread 4 include the plurality of center blocks 28 located on the equator plane CL. The plurality of center blocks 28 are placed so as to be spaced apart from each other in the circumferential direction.

Each center block 28 has a shape that is long in the axial direction of the tire 2 and short in the circumferential direction of the tire 2. **In** FIG. 2, the shape of the land surface 20 (hereinafter, also referred to as center land surface 30) of the center block 28 is a shape similar to a rectangle. **In** other words, the planar shape obtained by connecting the four corners of the land surface 20 of the center block 28 is a rectangle.

An edge 32 of the center land surface 30 includes a pair of circumferential edges 32t and a pair of axial edges 32y. The pair of circumferential edges 32t each extend in the circumferential direction. The pair of axial edges 32y each extend between the pair of circumferential edges 32t.

As shown in FIG. 2, the center land surface 30 is formed such that distance between the pair of axial edges 32y decreases toward the axial center thereof.

Each center block 28 of the tire 2 has a slot 34 provided in an axially center portion thereof so as to traverse the center block 28 in the circumferential direction. The slot 34 divides the center land surface 30 into two sub land surfaces 36. The depth, the opening width, etc., of the slot 34 are not particularly limited, and are determined as appropriate according to the specifications of the tire 2. The center block 28 may not necessarily have the slot 34.

An edge 38 of each sub land surface 36 includes a pair of circumferential edges 38t and a pair of axial edges 38y. Of the pair of circumferential edges 38t, the axially outer circumferential edge 38t is the circumferential edge 32t of the center land surface 30. The axially inner circumferential edge 38t is the boundary between the slot 34 and the sub land surface 36. The pair of axial edges 38y each form a part of the axial edge 32y of the center land surface 30. Each axial edge 38y is tilted relative to the axial direction. A tilt angle of the axial edge 38y is not less than 1 degree and not greater than 3 degrees. The tilt angle of the axial edge 38y is represented as an angle of the axial edge 38y with respect to the axial direction.

A plurality of side blocks 40 are provided in each of the side regions ZS. These side blocks 40 are located outward of the center blocks 28 in the axial direction. In the tire 2, the plurality of blocks 18 provided in the tread 4 include the plurality of side blocks 40 located outward of the center blocks 28 in the axial direction.

As shown in FIG. 2, in the tire 2, the plurality of side blocks 40 are arranged so as to be spaced apart from each other in the circumferential direction in each of the middle regions ZSM and the shoulder regions ZSS. In the tire 2, the side blocks 40 provided in the middle regions ZSM are also referred to as middle blocks 42, and the side blocks 40 provided in the shoulder regions ZSS are also referred to as shoulder blocks 44.

As shown in FIG. 2, the middle blocks 42 provided in the right and left middle regions ZSM are arranged such that the positions in the circumferential direction of the middle blocks 42 provided in the left middle region ZSM coincide with the positions in the circumferential direction of the middle blocks 42 provided in the right middle region ZSM. The shoulder blocks 44 provided in the right and left shoulder regions ZSS are arranged such that the positions in the circumferential direction of the shoulder blocks 44 provided in the left shoulder region ZSS coincide with the positions in the circumferential direction of the shoulder blocks 44 provided in the right shoulder region ZSS.

In the tire 2, the middle blocks 42 are located between the center blocks 28 and the shoulder blocks 44 in the axial direction. Each shoulder block 44 includes the end TE of the tread surface 14.

In each side region ZS, the middle blocks 42 and the shoulder blocks 44 are alternately arranged in the circumferential direction. A tie bar 46 is located between a middle block 42 and a shoulder block 44 located near the middle block 42. The tie bar 46 extends between the middle block 42 and the shoulder block 44.

In the tire 2, the shape of each side block 40 is not particularly limited. A well-known shape that is applied to side blocks of a tire for a motorcycle for running on rough terrain is applied to the shape of each side block 40 of the tire 2.

The arrangement of the side blocks 40 in each side region ZS shown in FIG. 2 is an example of the arrangement, and the arrangement of the side blocks 40 in each side region ZS is not particularly limited. The arrangement of the side blocks 40 in each side region ZS is determined as appropriate according to the specifications of the tire 2.

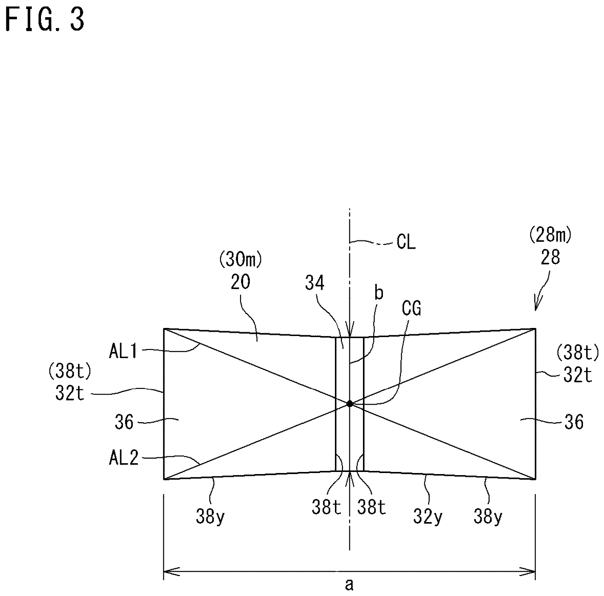

FIG. 3 shows a part of the development of the tread surface 14 shown in FIG. 2. FIG. 3 shows a center block 28. The center block 28 shown in FIG. 3 is also referred to as main center block 28m. The center blocks 28 include the main center block 28m. All of the center blocks 28 provided in the tread 4 shown in FIG. 1 are main center blocks 28m.

In the tire 2, if the main center blocks 28m are arranged at a constant pitch in the circumferential direction, the plurality of center blocks 28 may include, in addition to the main center blocks 28m, other blocks having different specifications such as shape and material from the main center blocks 28m.

In FIG. 3, a position indicated by reference sign CG is the center of gravity of the land surface 20 (i.e., main center land surface 30m) of the main center block 28m. The center of gravity CG is specified in the planar shape of the main center land surface 30m in FIG. 3. The center of gravity CG is also referred to as centroid. In FIG. 3, solid lines AL1 and AL2 are auxiliary lines indicating that the position indicated by reference sign CG is the center of gravity of the main center land surface 30m.

The center of gravity CG of the land surface 20 of each main center block 28m of the tire 2 is located on a center line of the opening width of the slot 34.

In the present invention, in the case where a slot 34 is formed on a land surface 20 as in the land surface 20 of the main center block 28m shown in FIG. 3, the center of gravity CG of the land surface 20 is specified on the assumption that the slot 34 is not formed on the land surface 20.

In FIG. 3, an alternate long and short dash line CL represents the above-described equator plane. As shown in FIG. 3, the center of gravity CG of the main center block 28m is located on the equator plane CL. The main center block 28m is provided in the tread 4 such that the center of gravity CG thereof is located on the equator plane CL.

In the tire 2, the position of each main center block 28m is on the equatorial plane. The main center block 28m may be provided in the tread 4 such that the center of gravity CG of the main center block 28m is shifted from the equator plane CL. From the viewpoint of exhibiting good traction performance, the main center block 28m is preferably provided in the tread 4 such that the center of gravity CG thereof is located on the equator plane CL.

As shown in FIG. 3, the main center block 28m has, in the land surface 20 thereof, the center of gravity CG of the land surface 20. In FIG. 3, a length indicated by reference sign a is the axial length of the land surface 20 at the center of gravity CG. A length indicated by reference sign b is the circumferential length of the land surface 20 at the center of gravity CG.

In the present invention, the axial length a of the land surface 20 at the center of gravity CG is the axial length of the main center block 28m at the center of gravity CG. The circumferential length b of the land surface 20 at the center of gravity CG is the circumferential length of the main center block 28m at the center of gravity CG. In the case where a slot 34 is formed on the land surface 20 of a main center block 28m and the center of gravity CG thereof is located on the slot 34 as in the tire 2, the axial length a and the circumferential length b of the land surface 20 at the center of gravity CG are specified on the assumption that the slot 34 is not formed on the land surface 20.

In the tire 2, at the center of gravity CG of the land surface 20 of the main center block 28m, the axial length a of the main center block 28m is not less than twice the circumferential length b thereof. In other words, the ratio (a/b) of the axial length a to the circumferential length b of the main center block 28m is not less than 2.

Accordingly, in the tire 2, while the stiffness of the main center block 28m is ensured, the length of each axial edge 32y (specifically, each axial edge 38y) thereof can be increased. In the tire 2, when the main center block 28m comes into contact with a road surface, the amount by which the main center block 28m scratches the road surface can be increased. The grip force is improved, so that the tire 2 can have improved traction performance.

Furthermore, in the tire 2, the hardness of the main center block 28m is not greater than 70. The main center block 28m can be easily deformed in a low strain region. The main center block 28m of the tire 2 can be easily deformed as soon as the axial edge 32y on the leading edge side in the rotation direction comes into contact with a road surface. In the tire 2, the contact area between the main center block 28m and a road surface when the main center block 28m comes into contact with the road surface can be increased. The tire 2 can increase the grip force and thus can have further improved traction performance.

Meanwhile, the rider drives the vehicle while controlling the traction of each tire. When the tire is generating a large amount of traction, a large force acts on the main center block 28m. When a large force acts on the main center block 28m, for example, the side surfaces of the main center block 28m may be greatly stretched, causing damage, such as cracks, to the main center block 28m.

However, in the tire 2, the 300% modulus of the main center block 28m is not less than 8.5 MPa. The main center block 28m has high strength in a high strain region. Even if the main center block 28m is greatly deformed and the side surfaces of the main center block 28m are greatly stretched, damage, such as cracks, to the main center block 28m is less likely to occur.

In the tire 2, at the center of gravity CG of the land surface 20 of the main center block 28m, the axial length a of the main center block 28m is not less than twice the circumferential length b thereof. Further, the hardness of the main center block 28m is not greater than 70, and the 300% modulus of the main center block 28m is not less than 8.5 MPa.

The tire 2 can have improved traction performance without impairing durability.

In the tire 2, the ratio (a/b) of the axial length a of the main center block 28m to the circumferential length b of the main center block 28m is preferably not less than 2.0 and not greater than 2.9.

When the ratio (a/b) is set to be not less than 2.0, in the tire 2, each axial edge 32y can be formed with a length that allows the axial edge 32y to contribute to generation of traction, so that the contact area between the main center block 28m and a road surface when the main center block 28m comes into contact with the road surface can be sufficiently increased. The tire 2 can have further improved traction performance. From this viewpoint, the ratio (a/b) is more preferably not less than 2.4. If the ratio (a/b) is less than 2, the length of each axial edge 32y of the main center block 28m is insufficient. In this case, the main center block 28m cannot scratch a road surface, and the tire 2 may spin.

When the ratio (a/b) is set to be not greater than 2.9, the tire 2 can optimize the force acting on the main center block 28m. The tire 2 can suppress occurrence of damage to the main center block 28m (especially damage from the root thereof). If the ratio (a/b) exceeds 2.9, the tire 2 can increase the amount by which the main center block 28m scratches a road surface and the contact area between the main center block 28m and the road surface, which is expected to enhance traction performance. However, on the other hand, there is a possibility that the risk of occurrence of damage increases and the main center block 28m cannot perform its function.

In the tire 2, when the ratio (a/b) is not less than 2.4 and not greater than 2.9, further preferably, the hardness of the main center block 28m is not greater than 67, and the 300% modulus of the main center block 28m is not less than 9.0 MPa. Accordingly, the tire 2 can have further improved traction performance without impairing durability.

As described above, the main center block 28m of the tire 2 has, at the center of gravity CG of the land surface 20 thereof, an axial length a of not less than twice the circumferential length b thereof, a hardness of not greater than 70, and a 300% modulus of not less than 8.5 MPa. The main center block 28m contributes to improving traction performance without impairing durability.

In the tire 2, from the viewpoint that the main center block 28m can sufficiently perform its function, the ratio (a/WT) of the axial length a of the main center block 28m to the development width WT of the tread surface 14 is preferably not less than 20% and not greater than 40%, more preferably not less than 25% and not greater than 35%, and further preferably not less than 30% and not greater than 35%.

As described above, the tread 4 of the tire 2 includes the plurality of blocks 18, the plurality of blocks 18 include the plurality of center blocks 28, and the plurality of center blocks 28 include the main center block 28m. From the viewpoint of being able to further improve traction performance without impairing durability, half or more of the plurality of center blocks 28 are preferably main center blocks 28m, and all of the plurality of center blocks 28 are more preferably main center blocks 28m.

In FIG. 1, a length indicated by reference sign h is the block height of the main center block 28m. The block height h is represented as the distance from the bottom of the groove 16 to the land surface 20. The block height h is measured in the tire 2 in the normal state.

In the tire 2, in the normal state, the block height h of the main center block 28m is preferably not less than 15 mm and not greater than 20 mm.

When the block height h is set to be not less than 15 mm, in the tire 2, the contact area between the main center block 28m and a road surface when the main center block 28m comes into contact with the road surface can be sufficiently increased. The tire 2 can have further improved traction performance. From this viewpoint, the block height h is more preferably not less than 16 mm.

When the block height h is set to be not greater than 20 mm, the tire 2 can suppress occurrence of damage to the main center block 28m. The tire 2 can maintain good durability. From this viewpoint, the block height h is more preferably not greater than 19 mm and further preferably not greater than 18 mm.

In the tire 2, the land ratio of the tread surface 14 is preferably not less than 13% and not greater than 60%. Accordingly, each main center block 28m can sufficiently perform its function. The tire 2 can have improved traction performance without impairing durability.

If the land ratio is less than 13%, the load acting on each block 18 is increased. At the main center block 28m, there is a concern that damage to the root thereof on which strain is concentrated may occur.

If the land ratio exceeds 60%, a situation in which gravel and the like easily become trapped between the blocks 18 occurs. In this case, at the main center block 28m, there is a possibility that movement thereof is restrained and the main center block 28m cannot sufficiently perform its function.

As described above, according to the present invention, the tire 2 for a motorcycle for running on rough terrain, which can have improved traction performance without impairing durability, is obtained.

### EXAMPLES

The following will describe the present invention in further detail by means of examples

### [Example 1]

A tire for a motorcycle for running on rough terrain (size = 120/90-19) having the basic structure shown in FIG. 1 to FIG. 3 and having specifications shown in Table 1 below was obtained.

The entire tread was formed from a single crosslinked rubber, and all the center blocks were formed as main center blocks.

The ratio (a/b), the 300% modulus of each main center block: M300, the hardness of each main center block: H, and the block height of each main center block: h were set as shown in Table 1 below.

### [Examples 2 to 4 and Comparative Examples 1 to 4]

Tires of Examples 2 to 4 and Comparative Examples 1 to 4 were obtained in the same manner as Example 1, except that the ratio (a/b), the 300% modulus of each main center block: M300, the hardness of each main center block: H, and the block height of each main center block: h were set as shown in Table 1 below. The tread of Example 4 is formed from a crosslinked rubber that is the same as the crosslinked rubber of the tread of Example 1. The crosslinked rubber of the tread of Example 2 is the same as the crosslinked rubber of the tread of Example 3. The crosslinked rubber of the tread of Comparative Example 1 is the same as the crosslinked rubber of the tread of Comparative Example 2.

### [Traction Performance]

A test tire was fitted onto a rim (size = 19×2.15) and inflated with air to adjust the internal pressure of the tire to 80 kPa. The tire was mounted to the rear wheel of a test vehicle (motorcycle for motocross racing with an engine displacement of 450 cc). A commercially available tire (80/100-21) fitted onto a rim (size = 21×1.60) and having an internal pressure adjusted to 80 kPa was mounted to the front wheel. The test vehicle was caused to run on a test course for motocross racing, and a test rider having professional equivalent skills made evaluations (sensory evaluations) for traction performance during straight running. The results are shown as indexes in Table 1 below. The higher the value is, the better the traction performance is.

### [Damage to Main Center Blocks]

A test tire was fitted onto a rim (size = 19×2.15) and inflated with air to adjust the internal pressure of the tire to 80 kPa. The tire was mounted to the rear wheel of a test vehicle (motorcycle for motocross racing with an engine displacement of 450 cc). A commercially available tire (80/100-21) fitted onto a rim (size = 21×1.60) and having an internal pressure adjusted to 80 kPa was mounted to the front wheel. A test rider having professional equivalent skills drove the test vehicle on a test course for motocross racing for 30 minutes. After driving, the surfaces of the main center blocks were observed to check the presence/absence of damage. The results are shown in Table 1 below with "G" for the case where no damage was observed and with "NG" for the case where damage was observed.

**[Table 1]**

| | Com. Ex. 1 | Com. Ex. 2 | Com. Ex. 3 | Com. Ex. 4 | Ex. 1 | Ex. 2 | Ex. 3 | Ex. 4 |
|---|---|---|---|---|---|---|---|---|
| a/b [-] | 1.5 | 2.2 | 2.2 | 3.0 | 2.2 | 2.2 | 2.8 | 2.8 |
| M300 [MPa] | 8.0 | 8.0 | 12.0 | 8.0 | 12.0 | 8.5 | 8.5 | 12.0 |
| H [-] | 67 | 67 | 80 | 80 | 65 | 70 | 70 | 65 |
| h [mm] | 16 | 18 | 16 | 16 | 19 | 19 | 16 | 16 |
| Traction performance | 5.0 | 6.0 | 5.5 | 6.5 | 9.0 | 8.5 | 9.0 | 9.5 |
| Damage | G | NG | G | NG | G | G | G | G |

As shown in Table, 1, it is confirmed that in each Example, no damage occurred and traction performance was improved, so that improvement of traction performance is achieved without impairing durability. From the evaluation results, advantages of the present invention are clear.

### INDUSTRIAL APPLICABILITY

The above-described technology capable of improving traction performance without impairing durability can be applied to various tires.

### REFERENCE SIGNS LIST

- 2: tire
- 4: tread
- 14: tread surface
- 18: block
- 20: land surface
- 28: center block
- 28m: main center block
- 30: center land surface
- 30m: main center land surface
- 32y: axial edge
- 42: middle block
- 44: shoulder block

## Claims

1. A tire (2) for a motorcycle for running on rough terrain, the tire (2) comprising a tread (4) formed from a crosslinked rubber and having a tread surface (14) that comes into contact with a road surface, wherein
the tread (4) includes a plurality of blocks (18) each having a land surface (20) forming a part of the tread surface (14),
the plurality of blocks (18) include a plurality of center blocks (28) located on an equator plane,
the plurality of center blocks (28) include a main center block (28m) having, in the land surface (30m) thereof, a center of gravity (CG) of the land surface (30m),
**characterized in that**
at the center of gravity (CG) of the land surface (30m) of the main center block (28m), an axial length (a) of the main center block (28m) is not less than twice a circumferential length (b) thereof,
the main center block (28m) has a type A durometer hardness of not greater than 70, and
the main center block (28m) has a 300% modulus of not less than 8.5 MPa,
wherein the type A durometer hardness is measured according to JIS K6253 under a temperature condition of 23°C and the 300% modulus is measured according to JIS K6251 under a temperature condition of 75°C.

2. The tire (2) for a motorcycle for running on rough terrain according to claim 1, wherein a ratio of the axial length (a) of the main center block (28m) to the circumferential length (b) of the main center block (28m) is not less than 2.0 and not greater than 2.9.

3. The tire (2) for a motorcycle for running on rough terrain according to claim 1 or 2, wherein half or more of the plurality of center blocks (28) are each the main center block (28m).

4. The tire (2) for a motorcycle for running on rough terrain according to any one of claims 1 to 3, wherein a block height (h) of the main center block (28m) is not less than 15 mm and not greater than 20 mm in a state where the tire (2) is fitted on a normal rim, an internal pressure of the tire (2) is adjusted to a normal internal pressure, and no load is applied to the tire (2).

5. The tire (2) for a motorcycle for running on rough terrain according to any one of claims 1 to 4, wherein the tread surface (14) has a land ratio of not less than 13% and not greater than 60%.

## Patentansprüche

1. Reifen (2) für ein Motorrad zum Fahren auf unebenem Gelände, wobei der Reifen (2) eine Lauffläche (4) umfasst, die aus einem vernetzten Kautschuk gebildet ist und eine Laufflächenoberfläche (14) aufweist, die mit einer Straßenoberfläche in Kontakt kommt, wobei
die Lauffläche (4) eine Vielzahl von Blöcken (18) umfasst, die jeweils eine Landoberfläche (20) aufweisen, die einen Teil der Laufflächenoberfläche (14) bildet,
die Vielzahl von Blöcken (18) eine Vielzahl von Mittelblöcken (28) umfasst, die sich auf einer Äquatorebene befinden,
die Vielzahl von Mittelblöcken (28) einen Hauptmittelblock (28m) umfasst, der in seiner Landoberfläche (30m) einen Schwerpunkt (CG) der Landoberfläche (30m) aufweist,
**dadurch gekennzeichnet, dass**
am Schwerpunkt (CG) der Landoberfläche (30m) des Hauptmittelblocks (28m) eine axiale Länge (a) des Hauptmittelblocks (28m) nicht weniger als das Doppelte seiner Umfangslänge (b) beträgt,
der Hauptmittelblock (28m) eine Durometer-Typ-A-Härte von nicht mehr als 70 aufweist, und
der Hauptmittelblock (28m) einen 300%-Modul von nicht weniger als 8,5 MPa aufweist,
wobei die Durometer-Typ-A-Härte gemäß JIS K6253 unter einer Temperaturbedingung von 23°C gemessen wird und der 300%-Modul gemäß JIS K6251 unter einer Temperaturbedingung von 75°C gemessen wird.

2. Reifen (2) für ein Motorrad zum Fahren auf unebenem Gelände nach Anspruch 1, wobei ein Verhältnis der axialen Länge (a) des Hauptmittelblocks (28m) zur Umfangslänge (b) des Hauptmittelblocks (28m) nicht weniger als 2,0 und nicht mehr als 2,9 beträgt.

3. Reifen (2) für ein Motorrad zum Fahren auf unebenem Gelände nach Anspruch 1 oder 2, wobei die Hälfte oder mehr der Vielzahl von Mittelblöcken (28) jeweils der Hauptmittelblock (28m) ist.

4. Reifen (2) für ein Motorrad zum Fahren auf unebenem Gelände nach einem der Ansprüche 1 bis 3, wobei eine Blockhöhe (h) des Hauptmittelblocks (28m) in einem Zustand, in dem der Reifen (2) auf eine normale Felge aufgezogen ist, ein Innendruck des Reifens (2) auf einen normalen Innendruck eingestellt ist und keine Last auf den Reifen (2) ausgeübt wird, nicht weniger als 15 mm und nicht mehr als 20 mm beträgt.

5. Reifen (2) für ein Motorrad zum Fahren auf unebenem Gelände nach einem der Ansprüche 1 bis 4, wobei die Laufflächenoberfläche (14) ein Landverhältnis von nicht weniger als 13 % und nicht mehr als 60 % aufweist.

## Revendications

1. Pneumatique (2) de motocyclette pour circuler en terrain accidenté, le pneumatique (2) comprenant une bande de roulement (4) formée à partir d'un caoutchouc réticulé et ayant une surface de bande de roulement (14) qui vient en contact avec une surface routière, dans lequel
la bande de roulement (4) inclut une pluralité de blocs (18) ayant chacun une surface en relief (20) formant une partie de la surface de bande de roulement (14),
la pluralité de blocs (18) incluent une pluralité de blocs centraux (28) situés sur un plan d'équateur,
la pluralité de blocs centraux (28) incluent un bloc central principal (28m) ayant, dans la surface en relief (30m) de celui-ci, un centre de gravité (CG) de la surface en relief (30m),
**caractérisé en ce que**
au niveau du centre de gravité (CG) de la surface en relief (30m) du bloc central principal (28m), une longueur axiale (a) du bloc central principal (28m) n'est pas inférieure à deux fois une longueur circonférentielle (b) de celui-ci,
le bloc central principal (28m) a une dureté au duromètre de type A qui n'est pas supérieure à 70, et
le bloc central principal (28m) a un module à 300 % qui n'est pas inférieur à 8,5 MPa,
dans lequel la dureté au duromètre de type A est mesurée selon la norme industrielle japonaise JIS K6253 dans une condition de température de 23 °C et le module à 300 % est mesuré selon la norme JIS K6251 dans une condition de température de 75 °C.

2. Pneumatique (2) de motocyclette pour circuler en terrain accidenté selon la revendication 1, dans lequel un rapport de la longueur axiale (a) du bloc central principal (28m) sur la longueur circonférentielle (b) du bloc central principal (28m) n'est pas inférieur à 2,0 et n'est pas supérieur à 2,9.

3. Pneumatique (2) de motocyclette pour circuler en terrain accidenté selon la revendication 1 ou 2, dans lequel la moitié ou plus de la pluralité de blocs centraux (28) sont chacun le bloc principal central (28m).

4. Pneumatique (2) de motocyclette pour circuler en terrain accidenté selon l'une quelconque des revendications 1 à 3, dans lequel une hauteur de bloc (h) du bloc central principal (28m) n'est pas inférieure à 15 mm et n'est pas supérieure à 20 mm dans un état dans lequel le pneumatique (2) est monté sur une jante normale, une pression interne du pneumatique (2) est ajustée à une pression interne normale, et aucune charge n'est appliquée sur le pneumatique (2).

5. Pneumatique (2) de motocyclette pour circuler en terrain accidenté selon l'une quelconque des revendications 1 à 4, dans lequel la surface de bande de roulement (14) a un rapport de relief qui n'est pas inférieur à 13 % et qui n'est pas supérieur à 60 %.
